Europäisches Patentamt

European Patent Office

Office européen des brevets

(11) Publication number: **0 198 582**
**B1**

# EUROPEAN PATENT SPECIFICATION

(45) Date of publication of patent specification: **19.09.90**

(21) Application number: **86301393.4**

(22) Date of filing: **26.02.86**

(60) Divisional application 89117671.1 filed on 26/02/86.

(51) Int. Cl.$^5$: **C 08 B 11/193,** C 08 F 14/06, C 08 F 2/20

(54) **Hydroxypropyl methyl cellulose ethers useful as suspending agents for suspension polymerization of vinyl chloride.**

(30) Priority: **28.02.85 US 706829**
**15.08.85 US 765788**

(43) Date of publication of application:
**22.10.86 Bulletin 86/43**

(45) Publication of the grant of the patent:
**19.09.90 Bulletin 90/38**

(84) Designated Contracting States:
**AT BE CH DE FR GB IT LI NL SE**

(56) References cited:
**US-A-4 096 325**
**US-B-4 389 393**

**CHEMICAL ABSTRACTS, vol. 81, no. 20, 18th November 1974, page 168, abstract no. 123244n, Columbus, Ohio, US; & SU - A - 397 519 (KHIN N.N. et al.)**

**CHEMICAL ABSTRACTS, vol. 85, no. 22, 29th November 1976, page 21, abstract no. 160851m, Columbus, Ohio, US; & JP - A - 76 47 991 (TOA GOSEI CHEMICAL INDUSTRY CO., LTD.)**

(73) Proprietor: **THE DOW CHEMICAL COMPANY**
**2030 Dow Center Abbott Road P.O. Box 1967 Midland Michigan 48640-1967 (US)**

(72) Inventor: **Hess, Roland H.P.**
**Appitalstrasse 56**
**CH-8804 Au (CH)**

(74) Representative: **Burford, Anthony Frederick et al**
**W.H. Beck, Greener & Co. 7 Stone Buildings Lincoln's Inn**
**London WC2A 3SZ (GB)**

Courier Press, Leamington Spa, England.

**Description**

The invention concerns suspending agents of the hydroxypropyl methyl cellulose type, and a process for preparing vinyl chloride polymers by suspension polymerization of vinyl chloride wherein hydroxypropyl methyl cellulose ethers are used as suspending agents, and new hydroxypropyl methyl cellulose ethers and their preparation.

Hydroxypropyl methyl cellulose ethers (HPMC ethers) have been known for a long time.

Various hydroxypropyl methyl cellulose ethers which are commercially available are those which have: a methoxyl substitution of from 27 percent to 30 percent and a hydroxypropoxyl substitution of from 4 percent to 7.5 percent; a methoxyl substitution of from 28 percent to 30 percent and a hydroxypropoxyl substitution from 7 percent to 12 percent; and a methoxyl substitution of from 19 percent to 24 percent and a hydroxypropoxyl substitution of from 4 percent to 12 percent. All these cellulose ethers can be used as primary suspending agents for the suspension polymerization of vinyl chloride. They are useful for controlling the size of the product polyvinyl chloride polymer particles. Unfortunately however, for some applications the porosity of the resulting polymer particles and accordingly their ability to absorb plasticizers is not sufficient.

From European Patent Application 0,080,580 it is known to use a hydroxypropyl methyl cellulose having a methoxyl substitution of 20 percent to 32 percent, a hydroxypropyl substitution of 2 percent to 10 percent and a viscosity of 30 to 70 mPa.s as a suspending agent for producing vinyl chloride (co)polymers which polymers are used for decreasing the viscosity of pasty polyvinyl chloride dispersions. Pastes of low viscosity are useful for producing articles which comprise a low amount of plasticizers. However, these suspending agents are not useful for producing vinyl chloride polymers or copolymers with high porosity.

From German Democratic Republic patent specification DD 160354, a process for producing polyvinyl chloride by suspension polymerization of vinyl chloride is known. Combinations of oil-soluble fatty acid esters are used as suspending agents. It is an object of said patent to provide polyvinyl chloride which is able to absorb large amounts of plasticizer. However, it is not clear from the teaching what are the ranges of percentage of the methoxyl and hydroxypropoxyl substitution. The only hydroxyproxyl methyl cellulose ether which the patent implies to have a relatively high methoxyl and hydroxypropoxyl substitution is stated to have a methoxyl degree of substitution of 1.95 and a hydroxypropyl molar substitution of 0.42.

Some hydroxypropyl methyl cellulose ethers are commercially available which have a methoxyl substitution of from 16.5 percent to 20 percent and a hydroxypropoxyl substitution of from 23 percent to 32 percent as well as hydroxypropyl methyl cellulose ethers which have a methoxyl substitution of from 19 percent to 28 percent and a hydroxypropoxyl substitution of from 7.5 percent to 11.5 percent. These hydroxypropyl methyl cellulose ethers are known to be useful in emulsion paints.

From U.S. Patent 3,388,082 water soluble HPMC ethers are known which have a methoxyl degree of substitution (DS) of from 0.4 to 1.3, a hydroxypropyl molar substitution (MS) of from 0.2 to 1.4 and a total molar substitution of at least 1.0. The DS/MS values of 0.4/0.2; 0.4/1.4; 1.3/0.2 and 1.3/1.4 can be calculated as percent of methoxyl substitution/hydroxypropoxyl substitution. The corresponding weight percent values are 7 percent/8.3 percent; 4.8 percent/43 percent; 21 percent/7.8 percent and 15.2 percent/40.8 percent, respectively. HPMC ethers which have a methoxyl substitution of from 27 percent to 30 percent and a hydroxypropoxyl substitution of from 4 percent to 7.5 percent, HPMC ethers which have a methoxyl substitution of from 28 percent and a hydroxypropoxyl substitution of from 7 percent to 12 percent, HPMC ethers which have a methoxyl substitution of from 19 percent to 24 percent and a hydroxypropoxyl substitution of from 4 percent to 12 percent and HPMC ethers which have a methoxyl substitution of from 16.5 percent to 20 percent and a hydroxypropoxyl substitution of from 23 percent to 30 percent are commercially available. These hydroxypropyl methyl cellulose ethers are well known as thickeners.

In U.S. Patent 3,617,588 a preparation of cellulose ether films, for example pharmaceutical capsule shells, is disclosed. The cellulose ethers are $C_{2-4}$ hydroxyalkyl $C_{1-2}$ alkyl cellulose ethers which have a DS of 0.6 to 2.0 and a MS of 0.07 to 1.0 and which are characterized by a viscosity of 2 to 20 mPa.s as a 2 weight percent aqueous solution at 20°C. Specifically, HPMC ethers are disclosed which have DS of 1.8 to 2 and a MS of 0.15 to 0.35 which corresponds to a methoxyl substitution of 28 percent to 31 percent and a hydroxypropoxyl substitution of 6 percent to 13 percent. U.S. Patent 3,493,407 discloses a process for preparing medical capsules from a solution of HPMC ethers with a methoxyl content of 18 to 32 weight percent and which is characterized by a viscosity of 2 to 20 mPa.s as a 2 weight percent aqueous solution at 20°C.

A useful thickening agent of the HPMC ether type for organic solvents is disclosed in U.S. Patent 3,839,319. The HPMC ethers have a DS of 0.2 to 1.0 and a MS of at least 1.5. The hydroxypropoxyl substitution of such HPMC ethers, expressed as weight percent, is more than 40 percent.

The present invention provides new suspending agents of the hydroxypropyl methyl cellulose type for suspension polymerization of vinyl chloride which do not have the deficiencies of the known suspending agents. Particularly, the present invention provides new suspending agents of the hydroxypropyl methyl cellulose type for suspension polymerization of vinyl chloride, which suspending agents are useful for increasing or controlling the porosity of the produced polyvinyl chloride particles. A process for preparing the new HPMC ethers is also disclosed.

One aspect of the present invention is a method for conducting suspension polymerization of vinyl chloride, optionally mixed with monomers being copolymerizable with vinyl chloride, by using as the suspending agent a hydroxypropyl methyl cellulose ether having a methoxyl substitution of from 21 percent to 35 percent and a hydroxypropoxyl substitution of from 15 percent to 35 percent.

From U.S. Patent 4,389,393 it is known to use hydroxypropyl methyl cellulose ethers having a methoxyl substitution of 16 to 24 weight percent, a hydroxypropoxyl substitution of from 4 to 32 weight percent and an average molecular weight of at least 50,000 as a carrier base material which is useful in sustained release therapeutic compositions. However, it is not suggested to use these hydroxypropyl methyl cellulose ethers as suspending agents. In U.S. Patent 4,389,393 the above-mentioned commercially available hydroxypropyl methyl cellulose ethers are also discussed briefly. It is mentioned that the commercially available hydroxypropyl methyl cellulose ethers have a methoxyl content of from 16.5 to 30 weight percent and a hydroxypropoxyl content of from 4 to 32 weight percent but this statement is erroneous. The actual levels of substitution in commercial cellulose ethers have been noted above.

Some of the hydroxypropyl methyl cellulose ethers which are useful as suspending agents are novel. Accordingly, a further aspect of the present invention are new hydroxypropyl methyl cellulose ethers which have a methoxyl substitution of from 21 percent to 35 percent and hydroxypropoxyl substitution of from 18 percent to 30 percent, and a number average molecular weight of less than 50,000.

These novel hydroxypropyl methyl cellulose ethers are very useful as suspending agents in the suspension polymerization of vinyl chloride. Accordingly, a further aspect of the present invention is the use of these novel hydroxypropyl methyl cellulose ethers as suspending agents for suspension polymerization of vinyl chloride, optionally mixed with monomers being copolymerizable with vinyl chloride. By the use of the above-mentioned suspending agents in the suspension polymerization process, polymers can be produced which have a high particle porosity.

The hydroxypropyl methyl cellulose ethers (HPMC ethers) useful in this invention are prepared by methods known in the art. An example of one such process comprises:

1) reacting cellulose with an aqueous alkali hydroxide, using 1 to 4, preferably 1.5 to 3.5, parts by weight of the aqueous alkali hydroxide per 1 part by weight of cellulose, the alkali hydroxide having a concentration of from 30 to 55 parts by weight, at a temperature of from 10 to 60°C, preferably from 20 to 50°C; followed by

2) reacting the product of step (1) above with methyl chloride and propylene oxide, using 0.3 to 0.9, preferably 0.3 to 0.8, parts by weight of propylene oxide per 1 part by weight of cellulose, using 1 to 3, preferably 2.0 to 2.6, more preferably 2.1 to 2.4, parts by weight of methyl chloride per 1 part by weight of cellulose, at a temperature of from 20 to 100°C, preferably 30 to 90°C.

The reaction of step (1) can be carried out by any conventional method, such as passing rolls of cellulose through a bath or spraying aqueous alkali hydroxide on chopped cellulose.

The reaction of step (2) can have the methyl chloride and propylene oxide added to the reaction either sequentially or simultaneously, e.g. either the whole amount of each reactant at one time (at one shot), or batch-wise (staged addition).

During both steps (1) and (2) it is advantageous to control the air (oxygen) in the reaction vessel in order to control the molecular weight of the product.

Some of the literature available to describe HPMC ether preparation is U.S. Patents 2,949,452; 3,388,082; 2,831,852; 4,410,693; and 4,456,751.

The hydroxypropyl methyl cellulose ethers of the present invention are defined primarily by their methoxyl substitution and hydroxypropoxyl substitution. The methoxyl and hydroxypropoxyl substitution have been measured and calculated according to ASTM—D 1347—72 and ASTM—D 2363—72, respectively. All the percentages of substitution are by weight of the finally substituted material.

The methoxyl substitution of the hydroxypropyl methyl cellulose ethers ranges from 21 percent, preferably from 22 percent, most preferably from 25 percent; to 35 percent, preferably to 33 percent, most preferably to 31 percent.

The hydroxypropoxyl substitution of the hydroxypropyl methyl cellulose ethers ranges from 15 percent, preferably from 16 percent, more preferably from 18 percent; most preferably 20 percent; to 35 percent, preferably to 30 percent, most preferably to 27 percent.

The sum of the percentage of the methoxyl and hydroxypropoxyl substitution is preferably at least 42 percent and preferably at most 58 percent.

Preferred hydroxypropyl methyl cellulose ethers for use as suspending agents have a methoxyl and a hydroxypropoxyl substitution of about 25 percent each.

The molecular weight of hydroxypropyl methyl cellulose can be expressed as the viscosity of the solution thereof in a solvent therefor. Unless otherwise stated, the molecular weight of hydroxypropyl methyl cellulose is given herein as the viscosity of a 2 weight percent solution of hydroxypropyl methyl cellulose in water as measured using UBBELOHDE viscosimeter at 20°C. The viscosity is generally 5 to 200,000 mPa.s. The hydroxypropyl methyl cellulose ethers have preferably a viscosity of from 5 mPa.s, most preferably a viscosity of from 10 mPa.S, to 400 mPa.s, most preferably to 100 mPa.s. The viscosities of 5, 10, 100 and 400 mPa.s correspond to number average molecular weight ($\overline{M}_n$) of 10,000, 13,000, 26,000 and 41,000, respectively. The number average molecular weight ($\overline{M}_n$) can be determined by osmotic pressure determinations.

The novel hydroxypropyl methyl cellulose ethers of the present invention have a number average

3

molecular weight less than 50,000. The preferred average molecular weight is from 5,000, most preferably from 10,000 to 40,000, most preferably to 30,000. A particularly preferred range of the molecular weight is from 13,000 to 26,000 which corresponds to a viscosity of 10 mPa.s to 100 mPa.s.

The novel hydroxypropyl methyl cellulose ethers of the present invention are for example useful as suspending agents for the suspension polymerization of vinyl chloride.

The hydroxypropyl methyl cellulose ethers used as suspending agents for the purpose of the present invention can be produced according to known methods, for example as described in U.S. Patents 2,949,452 and 3,388,082. The levels of substitution of the hydroxypropyl methyl cellulose ethers of the present invention can be achieved by increasing the amounts of propylene oxide and methyl chloride and reaction times until the desired substitution level has been reached.

The interfacial tension values of aqueous solutions of the hydroxypropyl methyl cellulose ethers used as suspending agents for the purpose of the present invention measured against polar organic solvents, are generally lower than the interfacial tension values of the commercially available hydroxypropyl methyl cellulose ethers. When hydroxypropyl methyl cellulose ethers are used as suspending agents for the suspension polymerisation of vinyl chloride, it is generally desirable to use hydroxypropyl methyl cellulose ethers having low interfacial tension values in order to provide high porosity of the produced polyvinyl chloride particles.

Unless otherwise mentioned, the interfacial tension values of aqueous solutions of 0.075 weight percent hydroxypropyl methyl cellulose ethers are measured against n-chlorobutane at 25°C using a KRUESS Spinning Drop Tensiometer.

Aqueous solutions of 0.075 weight percent of hydroxypropyl methyl cellulose ethers used as suspending agents of the purpose of the present invention have an interfacial tension value of preferably less than about 10 mN/m, most preferably less than about 6 mN/m, measured against n-chlorobutane at 25°C.

## Examples 1—10

In Table I, there are shown the interfacial tension values of Examples 1 to 10 and of comparative Example A, measured as defined above.

EP 0 198 582 B1

TABLE I

| Examples | Methoxyl weight % (a) | Hydroxy propoxyl weight % (b) | Viscosity 2 weight % in water (mPa·s) | IFT (mN/m) (c) |
|---|---|---|---|---|
| 1 | 27.9 | 21.2 | 260 | 4.76 |
| 2 | 29.2 | 21.6 | 82 | 4.06 |
| 3. | 28.9 | 20.2 | 121 | 5.87 |
| 4 | 28.1 | 21.0 | 261 | 5.37 |
| 5 | 26.1 | 24.8 | 209 | 4.27 |
| 6 | 25.5 | 25.9 | 27 | 4.87 |
| 7 | 29.2 | 19.0 | 428 | 6.21 |
| 8 | 21.1 | 31.0 | 74 | 5.11 |
| 9 | 29.3 | 17.2 | 287 | 6.49 |
| 10 | 27.0 | 18.7 | 51 | 3.1 |
| Comparative Example A | 28.5 | 5.8 | 50 | >10 |

(a) methoxyl substitution

(b) hydroxypropoxyl substitution

(c) interfacial tension of 0.075 weight percent sample in water at 25°C measured against n-chlorobutane by spinning drop tensiometer

The hydroxypropyl methyl cellulose ethers of Examples 1 to 10 are novel.

The hydroxypropyl methyl cellulose ethers described herein can be used as suspending agents for the suspension polymerization of vinyl chloride, optionally mixed with monomers being copolymerizable with vinyl chloride. Preferably, these hydroxypropyl methyl cellulose ethers are used as secondary or co-suspending agents, i.e. together with other suspending agents, for suspension polymerization of vinyl chloride.

For the production of some goods, vinyl chloride polymers or copolymers must be able to absorb plasticizers. Accordingly, particle porosity is an important property of these resins since it determines the ability of the resin to absorb liquid plasticizers.

The porosity of the polymer particles can be easily controlled or increased by using the novel suspending agents or by using the novel hydroxypropyl methyl cellulose ethers of the present invention as suspending agents.

The suspending agents are generally used in the amount of 0.02 percent to 0.3 percent preferably of 0.05 percent to 0.1 percent, based on the weight of the monomers.

Methods for preparing polyvinyl chloride by suspension polymerization of vinyl chloride are known in the art. Such polymerization processes are for example described in DE 2153727—B and in DD patent specification 160354.

Monomers which can be copolymerized with vinyl chloride are for example vinyl esters of an aliphatic monocarboxylic acid, said acid containing 1 to 18 carbon atoms, for example vinyl formate, vinyl acetate,

5

vinyl propionate, vinyl pelargonate, vinyl laurate and vinyl stearate; alkyl esters of acrylic or methacrylic acids, for example methyl methacrylate, ethyl acrylate, butyl acrylate and lauryl methacrylate; monoolefins, for example ethylene or propylene; vinylidene halides, for example vinylidene chloride; acrylonitrile; methacrylonitrile; esters of maleic acid, for example diethyl and dipropyl maleinate; and mixtures of these monomers.

The desired amount of the suspending agent is preferably dispersed in water at a temperature of 70°C to 95°C, most preferably above 80°C. The resulting slurry is then cooled under agitation to a temperature of preferably 5°C to 20°C, most preferably to below 15°C, until a constant viscosity solution is obtained.

The aqueous solution of the suspension agent can then be added to the suspension polymerization system. The polymerization can be carried out according to a known procedure.

It is often desired that by suspension polymerization of vinyl chloride, optionally mixed with monomers being copolymerizable with vinyl chloride, polymer particles are produced which have high porosity combined with relatively high bulk density. For obtaining this combination of properties it is recommended to use the new suspending agents or the new hydroxypropyl methyl cellulose ethers of the present invention as secondary suspending agents in combination with other suspending agents.

The hydroxypropyl methyl cellulose type suspending agents of the present invention are preferably used together with known hydroxypropyl methyl cellulose ethers which have a methoxy substitution of from 19 percent to 30 percent, preferably from 25 percent to 30 percent, and a hydroxypropoxyl substitution of from 4 percent to 12 percent, preferably from 4 percent to 7.5 percent. Since such hydroxypropyl methyl cellulose ethers have the same functional groups, they are compatible with the novel suspending agents of the hydroxypropyl methyl cellulose type, i.e. the novel and the known suspending agents do not react adversely with each other.

These known hydroxypropyl methyl cellulose ethers and the novel suspending agents of the present invention are generally blended in a weight ratio of from 9:1 to 1:4 to give a mixture by which certain desired porosities of polyvinyl chloride prepared by suspension polymerization can be obtained. A preferred weight ratio of the mentioned known hydroxypropyl methyl cellulose ethers and the novel suspending agents of the hydroxypropyl methyl cellulose type is from 4:1 to 1:3.

Such mixtures of hydroxypropyl methyl cellulose type suspending agents are generally used in amounts of 0.02 to 0.3 weight percent, preferably in amount of 0.05 to 0.15 weight percent, based on the weight of monomers to be polymerized.

## Example 11

The production of polyvinyl chloride according to a known suspension polymerization process is described.

In the comparative run 0.15 percent of known hydroxypropyl methyl cellulose ether of Comparative Example A (see Table I), based on the weight of vinyl chloride, is used as a suspending agent.

In additional runs, this suspending agent is used in combination with or is partially replaced by the novel cellulose ether of Example 1 (see Table I).

The concentrations of suspending agents used, the particle size and the particle size distribution, the porosity and the bulk density of the produced polyvinyl chloride are set forth in Table II. Unless otherwise noted, all percentages are based on the weight of vinyl chloride. The invention is not limited to this working example.

750 g vinyl chloride, 1500 g deionized water, 0.10 percent of bis(4-t-butylcyclohexyl)peroxidicarbonate, commercially available from Noury Chemical Company, U.S.A. as "Percadox 16W40", 0.08 percent sodium bicarbonate and the concentration of suspending agent from the compositions of comparative Example A and Example 1 set forth in Table II were charged into a three liter jacketed stainless steel reactor, equipped with turbine agitators and two knife baffles. The agitator speed was 450 revolutions per minute. The mixture was reacted at about 55°C until a drop in pressure of 10 pounds/sq. inch (69 mbar) was observed in the reactor indicating that substantially most of the monomeric reactant had been consumed.

6

TABLE II

| Suspending agent Concentration (weight percent) | | Particle size (ηm) | Particle size distribution (% <75 ηm) (% >250 ηm) | | Porosity (cm³/g) | Bulk density settled (g/cm³) |
|---|---|---|---|---|---|---|
| A*) | 1**) | Average | % <75 | % >250 | | |
| 0.15 | - | 147 | 3.8 | 4.8 | 0.07 | 0.67 |
| 0.15 | 0.038 | 160 | 2.5 | 8.0 | 0.15 | 0.65 |
| 0.15 | 0.075 | 169 | 2.2 | 11.1 | 0.22 | 0.59 |
| 0.15 | 0.112 | 174 | 2.2 | 13.2 | 0.24 | 0.53 |
| 0.15 | 0.15 | 170 | 2.8 | 12.6 | 0.22 | 0.54 |
| 0.112 | 0.038 | 177 | 1.4 | 11.2 | 0.15 | 0.57 |
| 0.075 | 0.075 | 240 | 0.5 | 51.7 | 0.24 | 0.52 |
| 0.038 | 0.112 | 305 | 0 | 76.2 | 0.30 | 0.49 |

*)  methoxyl substitution : 28.5 percent
    hydroxypropoxyl substitution: 5.8 percent

**)  methoxyl substitution: 27.9 percent
     hydroxypropoxyl substitution: 21.2 percent

Futher batches of polyvinyl chloride were produced according to this example, 0.15 weight percent of the hydroxypropyl methyl cellulose ether of Comparative Example A and 0.075 percent of the hydroxypropyl methyl cellulose ether of Examples 4, 5 and 6 (see Table I) were used as suspending agents. Particle size distribution, bulk density and porosity of the produced polyvinyl chloride has been compared to a comparative run wherein only 0.15 weight percent of hydroxypropyl methyl cellulose ether of Comparative Example A has been used as suspending agent.

7

TABLE III

| Suspending agent In addition to 0.15% Comp. Ex. A (weight percent) | Particle size distribution (%<75 µm/ %>250 µm) | | Porosity (cm³/g) | Bulk density settled (g/cm³) |
|---|---|---|---|---|
| | % <75 | % >250 | | |
| (no additional agent) | 3.8 | 4.8 | 0.07 | 0.67 |
| 0.075% Ex. 4 | 1.1 | 12.0 | 0.16 | 0.54 |
| 0.075% Ex. 5 | 1.1 | 12.6 | 0.19 | 0.56 |
| 0.075% Ex. 6 | 0.8 | 18.9 | 0.19 | 0.55 |

As shown by Tables II and III, the porosity of the polyvinyl chloride produced according to the suspension polymerization of vinyl chloride can be increased considerably by using the novel hydroxypropyl methyl cellulose ethers in addition to or partially replacing the known hydroxypropyl methyl cellulose ethers which are used as suspending agents for controlling the particle size of the polymer particles. The bulk density is thereby not drastically reduced.

## Example 12

Preparation of a HPMC ether

In a suitable sized reaction vessel equipped with agitator, temperature controls and vacuum line, 2 kilogramms (kg) of ground cellulose were alkalised with 6.3 kg of 50 weight percent aqueous sodium hydroxide at about 30°C.

The vessel is then evacuated and after evacuation, 4.6 kg methyl chloride and 1.2 kg propylene oxide were added. The temperature in the vessel was subsequently increased from 30°C to 90°C. After about 8 hours the HPMC ether was washed with water of about 90°C and recovered and dried.

The resulting HPMC ether had a methoxyl substitution of 28 percent and a hydroxypropyl substitution of 21 percent. The viscosity of a 2 weight percent aqueous solution of the prepared HPMC ether is 75000 mPa.s, measured using an UBBELOHDE viscometer.

**Claims for the Contracting States: BE CH DE FR GB IT LI NL SE**

1. A method of suspension polymerization of vinyl chloride, optionally mixed with one or more monomers copolymerizable with vinyl chloride, using, as the suspending agent, a hydroxypropyl methyl cellulose ether characterised in that said ether has a methoxyl substitution of from 21 percent to 35 percent and a hydroxypropoxyl substitution of from 15 percent to 35 percent.

2. A method as claimed in Claim 1, wherein said ether has a methoxyl substitution of from 22 percent to 33 percent and a hydroxypropoxyl substitution of from 16 percent to 30 percent.

3. A hydroxypropyl methyl cellulose ether characterised in that it has a methoxyl substitution of from 21 percent to 35 percent and a hydroxypropyl substitution of from 18 percent to 30 percent and a number average molecular weight of less than 50,000.

4. A hydroxypropyl methyl cellulose ether as claimed in Claim 3, wherein the methoxyl substitution is from 22 percent to 33 percent and the hydroxypropoxyl substitution is from 18 percent to 30 percent.

5. A hydroxypropyl methyl cellulose ether as claimed in Claim 3 or Claim 4, wherein the sum of the methoxyl and hydroxypropoxyl substitution is from 42 percent to 58 percent.

6. A hydroxypropyl methyl cellulose ether as claimed in Claim 5, wherein the methoxyl substitution is from 25 percent to 31 percent and the hydroxypropyl substitution is from 18 percent to 27 percent.

7. A hydroxypropyl methyl cellulose ether as claimed in any one of Claims 3 to 6, wherein the ether has a number average molecular weight of from 5,000 to 40,000.

8. A hydroxypropyl methyl cellulose ether as claimed in Claim 7, wherein the number average molecular weight is from 10,000 to 30,000.

9. A hydroxypropyl methyl cellulose ether as claimed in Claim 8, wherein the number average molecular weight is from 13,000 to 26,000.

10. A hydroxypropyl methyl cellulose ether as claimed in any one of Claims 3 to 9, wherein the interfacial tension of its 0.075 weight percent solution in water measured against n-chlorobutane at 25°C is lower than 10 mN/m.

11. A hydroxypropyl methyl cellulose ether as claimed in Claim 10, wherein said interfacial tension is lower than 6 mN/m.

12. A method as claimed in Claim 1, wherein the suspending agent is a hydroxypropyl methyl cellulose ether as claimed in any one of Claims 3 to 11.

13. A method as claimed in any one of Claims 1, 2 and 12, wherein additionally a water soluble hydroxypropyl methyl cellulose ether having a methoxyl substitution of from 19 percent to 30 percent and a hydroxypropoxyl substitution of from 4 percent to 12 percent is used as a suspending agent.

14. A method as claimed in Claim 13, wherein said additional water soluble hydroxypropyl methyl cellulose ether has a methoxyl substitution of from 27 percent to 30 percent and a hydroxypropoxyl substitution of from 4 percent to 7.5 percent.

15. A process for preparing a hydroxypropyl methyl cellulose ether as claimed in Claim 1 which comprises:

1) reacting cellulose with an aqueous alkali hydroxide, using 1 to 4 parts by weight of the aqueous alkali hydroxide per 1 part by weight of cellulose, the alkali hydroxide having a concentration of from 30 to 55 parts by weight, at a temperature of from 10 to 60°C, followed by

2) reacting the product of step (1) with methyl chloride and propylene oxide, using 0.3 to 0.9 parts by weight of propylene oxide per 1 part by weight of cellulose, using 1 to 3 parts by weight of methyl chloride per 1 part by weight of cellulose, at a temperature of from 20 to 100°C.

# EP 0 198 582 B1

**Claims for the Contracting State: AT**

1. A method of suspension polymerization of vinyl chloride, optionally mixed with one or more monomers copolymerizable with vinyl chloride, using, as the suspending agent, a hydroxypropyl methyl cellulose ethers characterised in that said ether has a methoxyl substitution of from 21 percent to 35 percent and a hydroxypropoxyl substitution of from 15 percent to 35 percent.

2. A method as claimed in Claim 1, wherein said ether has a methoxyl substitution of from 22 percent to 33 percent and a hydroxypropoxyl substitution of from 16 percent to 30 percent.

3. A process for preparing a hydroxypropyl methyl cellulose ether having a methoxyl substitution of from 21 percent to 35 percent and a hydroxypropoxyl substitution of from 18 percent to 30 percent and a number average molecular weight of less than 50,000, which comprises:

1) reacting cellulose with an aqueous alkali hydroxide, using 1 to 4 parts by weight of the aqueous alkali hydroxide per 1 part by weight of cellulose, the alkali hydroxide having a concentration of from 30 to 55 parts by weight, at a temperature of from 10 to 60°C, followed by

2) reacting the product of step (1) with methyl chloride and propylene oxide, using 0.3 to 0.9 parts by weight of propylene oxide per 1 part by weight of cellulose, using 1 to 3 parts by weight of methyl chloride per 1 part by weight of cellulose, at a temperature of from 20 to 100°C.

4. A process as claimed in Claim 3, wherein the ether has a methoxyl substitution of from 22 percent to 33 percent and a hydroxypropoxyl substitution of from 18 percent to 30 percent.

5. A process as claimed in Claim 3 or Claim 4, wherein the sum of the methoxyl and hydroxypropoxyl substitution is from 42 percent to 58 percent.

6. A process as claimed in Claim 5, wherein the ether has a methoxyl substitution of from 25 percent to 31 percent and a hydroxypropoxyl substitution of from 18 percent to 27 percent.

7. A process as claimed in any one of Claims 3 to 6, wherein the ether has a number average molecular weight of from 5,000 to 40,000.

8. A process as claimed in Claim 7, wherein the number average molecular weight is from 10,000 to 30,000.

9. A process as claimed in Claim 8, wherein the number average molecular weight is from 13,000 to 26,000.

10. A process as claimed in any one of Claims 3 to 8, wherein the interfacial tension of a 0.075 weight percent solution of the ether in water measured against n-chlorobutane at 25°C is lower than 10 mN/m.

11. A process as claimed in Claim 10, wherein said interfacial tension is lower than 6 mN/m.

12. A method as claimed in Claim 1, wherein the suspending agent is a hydroxypropyl methyl cellulose ether as defined in any one of Claims 3 to 11.

13. A method as claimed in any one of Claims 1, 2 and 12, wherein additionally a water soluble hydroxypropyl methyl cellulose ether having a methoxyl substitution of from 19 percent to 30 percent and a hydroxypropoxyl substitution of from 4 percent to 12 percent is used as a suspending agent.

14. A method as claimed in Claim 13, wherein said additional water soluble hydroxypropyl methyl cellulose ether has a methoxyl substitution of from 27 percent to 30 percent and a hydroxypropoxyl substitution of from 4 percent to 7.5 percent.

**Patentansprüche für die Vertragsstaaten: BE CH DE FR GB IT LI NL SE**

1. Verfahren zum Polymerisieren von Vinylchlorid in Suspension, gegebenenfalls in Mischung mit einem oder mehreren, mit Vinylchlorid copolymerisierbaren Monomeren unter Verwendung von Hydroxypropylmethylcelluloseether als Suspendierungsmittel, dadurch gekennzeichnet, daß der Ether eine Methoxylsubstitution von 21% bis 35% und eine Hydroxypropoxylsubstitution von 15% bis 35% aufweist.

2. Verfahren nach Anspruch 1, dadurch gekennzeichnet, daß der Ether eine Methoxylsubstitution von 22% bis 33% und eine Hydroxypropoxylsubstitution von 16% bis 30% aufweist.

3. Hydroxypropylmethylcelluloseether, dadurch gekennzeichnet, daß er eine Methoxylsubstitution von 21% bis 35% und eine Hydroxypropoxylsubstitution von 18% bis 30% und ein zahlenmittleres Molekulargewicht von weniger als 50.000 aufweist.

4. Hydroxypropylmethylcelluloseether nach Anspruch 3, dadurch gekennzeichnet, daß die Methoxylsubstitution von 22% bis 33% und die Hydroxypropoxylsubstitution von 18% bis 30% beträgt.

5. Hydroxypropylmethylcelluloseether nach Anspruch 3 oder 4, dadurch gekennzeichnet, daß die Summe der Methoxyl- und Hydroxypropoxylsubstitution von 42% bis 58% beträgt.

6. Hydroxypropylmethylcelluloseether nach Anspruch 5, dadurch gekennzeichnet, daß die Methoxylsubstitution von 25% bis 31% und die Hydroxypropoxylsubstitution von 18% bis 27% beträgt.

7. Hydroxypropylmethylcelluloseether nach jedem der Ansprüche 3 bis 6, dadurch gekennzeichnet, daß der Ether ein zahlenmittleres Molekulargewicht von 5.000 bis 40.000 aufweist.

8. Hydroxypropylmethylcelluloseether nach Anspruch 7, dadurch gekennzeichnet, daß das zahlenmittlere Molekulargewicht von 10.000 bis 30.000 beträgt.

9. Hydroxypropylmethylcelluloseether nach Anspruch 8, dadurch gekennzeichnet, daß das zahlenmittlere Molekulargewicht von 13.000 bis 26.000 beträgt.

10

10. Hydroxypropylmethylcelluloseether nach jedem der Ansprüche 3 bis 9, dadurch gekennzeichnet, daß die Phasengrenzspannung einer 0,075 gewichtsprozentigen Lösung des Ethers in Wasser, gemessen gegen n-Chlorbutan, bei 25°C kleiner als 10 mN/m ist.

11. Hydroxypropylmethylcelluloseether nach Anspruch 10, dadurch gekennzeichnet, daß die Grenzflächenspannung kleiner als 6 mN/m ist.

12. Verfahren nach Anspruch 1, dadurch gekennzeichnet, daß das Suspendiermittel ein Hydroxypropylmethylcelluloseether nach jedem der Ansprüche 3 bis 11 ist.

13. Verfahren nach jedem der Ansprüche 1, 2 und 12, dadurch gekennzeichnet, daß zusätzlich ein· wasserlöslicher Hydroxypropylmethylcelluloseether mit einer Methoxylsubstitution von 19% bis 30% und einer Hydroxypropoxylsubstitution von 4% bis 12% als Suspendiertmittel verwendet wird.

14. Verfahren nach Anspruch 13, dadurch gekennzeichnet, daß der zusätzliche wasserlösliche Hydroxypropylmethylcelluloseether eine Methoxylsubstitution von 27% bis 30% und eine Hydroxylpropoxylsubstitution von 4% bis 7,5% aufweist.

15. Verfahren zum Herstellen eines Hydroxypropylmethylcelluloseethers nach Anspruch 1, gekennzeichnet durch

1) Umsetzen von Cellulose mit wäßrigem Alkalihydroxid bei einer Temperatur von 10 bis 60°C unter Verwendung von 1 bis 4 Gewichtsteilen wäßrigen Alkalihydroxids pro 1 Gewichtsteil Cellulose, wobei das Alkalihydroxid eine Konzentration von 30 bis 55 Gewichtsteilen aufweist, anschließend

2) Umsetzen des Produktes aus Schritt (1) mit Methylchlorid und Propylenoxid unter Verwendung von 0,3 bis 0,9 Gewichtsteilen Propylenoxid pro 1 Gewichtsteil Cellulose und von 1 bis 3 Gewichtsteilen Methylchlorid pro 1 Gewichtsteil Cellulose, bei einer Temperatur von 20 bis 100°C.

**Patentansprüche für den Vertragsstaat: AT**

1. Verfahren zum Polymerisieren von Vinylchlorid in Suspension, gegebenenfalls in Mischung mit einem oder mehreren, mit Vinylchlorid copolymerisierbaren Monomeren unter Verwendung von Hydroxypropylmethylcelluloseether als Suspendierungsmittel, dadurch gekennzeichnet, daß der Ether eine Methoxylsubstitution von 21% bis 35% und eine Hydroxypropoxylsubstitution von 15% bis 35% aufweist.

2. Verfahren nach Anspruch 1, dadurch gekennzeichnet, daß der Ether eine Methoxylsubstitution von 22% bis 33% und eine Hydroxypropoxylsubstitution von 16% bis 30% aufweist.

3. Verfahren zum Herstellen eines Hydroxypropylmethylcelluloseethers mit einer Methoxylsubstitution von 21% bis 35% und einer Hydroxylpropoxylsubstitution von 18% bis 30% und einem zahlenmittleren Molekulargewicht von weniger als 50.000 durch

1) Umsetzen von Cellulose mit wäßrigem Alkalihydroxid bei einer Temperatur von 10 bis 60°C unter Verwendung von 1 bis 4 Gewichtsteilen wäßrigen Alkalihydroxids pro 1 Gewichtsteil Cellulose, wobei das Alkalihydroxid eine Konzentration von 30 bis 55 Gewichtsteilen aufweist, anschließend

2) Umsetzen des Produktes aus Schritt (1) mit Methylchlorid und Propylenoxid unter Verwendung von 0,3 bis 0,9 Gewichtsteilen Propylenoxid pro 1 Gewichtsteil Cellulose und von 1 bis 3 Gewichtsteilen Methylchlorid pro 1 Gewichtsteil Cellulose, bei einer Temperatur von 20 bis 100°C.

4. Verfahren nach Anspruch 3, dadurch gekennzeichnet, daß der Ether eine Methoxylsubstitution von 22% bis 33% und die Hydroxypropoxylsubstitution von 18% bis 30% aufweist.

5. Verfahren nach Anspruch 3 oder 4, dadurch gekennzeichnet, daß die Summe der Methoxyl- und Hydroxypropoxylsubstitution von 42% bis 58% beträgt.

6. Verfahren nach Anspruch 5, dadurch gekennzeichnet, daß der Ether eine Methoxylsubstitution von 25% bis 31% und eine Hydroxypropoxylsubstitution von 18% bis 27% aufweist.

7. Verfahren nach jedem der Ansprüche 3 bis 6, dadurch gekennzeichnet, daß der Ether ein zahlenmittleres Molekulargewicht von 5.000 bis 40.000 aufweist.

8. Verfahren nach Anspruch 7, dadurch gekennzeichnet, daß das zahlenmittlere Molekulargewicht von 10.000 bis 30.000 beträgt.

9. Verfahren nach Anspruch 8, dadurch gekennzeichnet, daß das zahlenmittlere Molekulargewicht von 13.000 bis 26.000 beträgt.

10. Verfahren nach jedem der Ansprüche 3 bis 9, dadurch gekennzeichnet, daß die Phasengrenzspannung einer 0,075 gewichtsprozentigen Lösung des Ethers in Wasser, gemessen gegen n-Chlorbutan, bei 25°C kleiner als 10 mN/m ist.

11. Verfahren nach Anspruch 10, dadurch gekennzeichnet, daß die Grenzflächenspannung kleiner als 6 mN/m ist.

12. Verfahren nach Anspruch 1, dadurch gekennzeichnet, daß das Suspendiermittel ein Hydroxypropylmethylcelluloseether nach jedem der Ansprüche 3 bis 11 ist.

13. Verfahren nach jedem der Ansprüche 1, 2 und 12, dadurch gekennzeichnet, daß zusätzlich eine wasserlöslicher Hydroxypropylmethylcelluloseether mit einer Methoxylsubstitution von 19% bis 30% und einer Hydroxypropoxylsubstitution von 4% bis 12% als Suspendiertmittel verwendet wird.

14. Verfahren nach Anspruch 13, dadurch gekennzeichnet, daß der zusätzliche wasserlösliche Hydroxypropylmethylcelluloseether eine Methoxylsubstitution von 27% bis 30% und eine Hydroxylpropoxylsubstitution von 4% bis 7,5% aufweist.

11

# EP 0 198 582 B1

**Revendications pour les Etats contractants: BE CH DE FR GB IT LI NL SE**

1. Procédé de polymérisation en suspension du chlorure de vinyle, éventuellement mélangé avec un ou plusieurs monomères copolymérisables avec le chlorure de vinyle, avec utilisation, en tant qu'agent de mise en suspension, d'un éther d'hydroxypropyle et de méthyle de la cellulose, caractérisé en ce que ledit éther a une substitution en méthoxy de 21 à 35% et une substitution en hydroxypropoxy de 15 à 35%.

2. Procédé selon la revendication 1, dans lequel ledit éther a une substitution en méthoxy de 22 à 33% et une substitution en hydroxypropoxy de 16 à 30%.

3. Ether d'hydroxypropyle et de méthyle de la cellulose, caractérisé en ce qu'il a une substitution en méthoxy de 21 à 35% et une substitution en hydroxypropoxy de 18 à 30%, et une mass moléculaire moyenne en nombre inférieure à 50 000.

4. Ether d'hydroxypropyle et de méthyle de la cellulose la revendication 3, dans lequel la substitution en méthoxy est de 22 à 33% et la substitution en hydroxypropoxy est de 18 à 30%.

5. Ether d'hydroxypropyle et de méthyle de la cellulose selon la revendication 3 ou 4, dans lequel la somme des substitutions en méthoxy et en hydroxypropoxy est de 42 à 58%.

6. Ether d'hydroxypropyle et de méthyle de la cellulose selon la revendication 5, dans lequel la substitution en méthoxy est de 25 à 31% et la substitution en hydroxypropoxy est de 18 à 27%.

7. Ether d'hydroxypropyle et de méthyle de la cellulose selon l'une quelconque des revendications 3 à 6, caractérisé en ce qu'il a une masse moléculaire moyenne en nombre de 5 000 à 40 000.

8. Ether d'hydroxypropyle et de méthyle de la cellulose selon la revendication 7, dans lequel la masse moléculaire moyenne en nombre est de 10 000 à 30 000.

9. Ether d'hydroxypropyle et de méthyle de la cellulose selon la revendication 8, dans lequel la masse moléculaire moyenne en nombre est de 13 000 à 26 000.

10. Ether d'hydroxypropyle et de méthyle de la cellulose selon l'une quelconque des revendications 3 à 9, dont la solution à 0,075% en poids de l'eau présente une tension interfaciale, mesurée par rapport à du n-chlorobutane à 25°C, est inférieure à 10 mN/m.

11. Ether d'hydroxypropyle et de méthyle de la cellulose selon la revendication 10, dans lequel ladite tension interfaciale est inférieure à 6 mN/m.

12. Procédé selon la revendication 1, dans lequel l'agent de mise en suspension est un éther d'hydroxypropyle et de méthyle de la cellulose selon l'une quelconque des revendications 3 à 11.

13. Procédé selon l'une quelconque des revendications 1, 2 et 12, dans lequel on utilise en outre en tant qu'agent de mise en suspension un éther d'hydroxypropyle et de méthyle de la cellulose soluble dans l'eau, ayant une substitution en méthoxy de 19 à 30% et une substitution en hydroxypropoxy de 4 à 12%.

14. Procédé selon la revendication 13, dans lequel ledit éther d'hydroxypropyle et de méthyle de la cellulose supplémentaire, soluble dans l'eau, a une substitution en méthoxy de 27 à 30% et une substitution en hydroxypropoxy de 4 à 7,5%.

15. Procédé pour la préparation d'un éther d'hydroxypropyle et de méthyle de la cellulose la revendication 1, lequel comprend:

1) la mise en réaction de la cellulose avec un hydroxyde alcalin en solution aqueuse, avec utilisation de 1 à 4 parties en poids de la solution aqueuse d'hydroxyde alcalin pour 1 partie en poids de cellulose, l'hydroxyde alcalin étant à une concentration de 30 à 55 parties en poids, à une température de 10 à 60°C, suivie de

2) la mise en réaction du produit de l'étape (1) avec du chlorure de méthyle et de l'oxyde de propylène, avec utilisation de 0,3 à 0,9 partie en poids d'oxyde de propylène pour 1 partie en poids de cellulose, et de 1 à 3 parties en poids de chlorure de méthyle pour 1 partie en poids de cellulose, à une température de 20 à 100°C.

**Revendications pour l'Etat contractant: AT**

1. Procédé de polymérisation en suspension du chlorure de vinyle, éventuellement mélangé avec un ou plusieurs monomères copolymérisables avec le chlorure de vinyle, avec utilisation, en tant qu'agent de mise en suspension, d'un éther d'hydroxypropyle et de méthyle de la cellulose, caractérisé en ce que ledit éther a une substitution en méthoxy de 21 à 35% et une substitution en hydroxypropoxy de 15 à 35%.

2. Procédé selon la revendication 1, dans lequel ledit éther a une substitution en méthoxy de 22 à 33% et une substitution en hydroxypropoxy de 16 à 30%.

3. Procédé pour la préparation d'un éther d'hydroxypropyle et de méthyle de la cellulose ayant une substitution en méthoxy de 21 à 35% et une substitution en hydroxypropoxy de 18 à 30%, et une masse moléculaire moyenne en nombre inférieure à 50 000, lequel comprend:

1) la mise en réaction de la cellulose avec un hydroxyde alcalin en solution aqueuse, avec utilisation de 1 à 4 parties en poids de la solution aqueuse d'hydroxyde alcalin pour 1 partie en poids de cellulose, l'hydroxyde alcalin étant à une concentration de 30 à 55 parties en poids, à une température de 10 à 60°C, suivie de

2) la mise en réaction du produit de l'étape (1) avec du chlorure de méthyle et de l'oxyde de propylène, avec utilisation de 0,3 à 0,9 partie en poids d'oxyde de propylène pour 1 partie en poids de cellulose, et de 1 à 3 parties en poids de chlorure de méthyle pour 1 partie en poids de cellulose, à une température de 20 à 100°C.

4. Procédé selon la revendication 3, dans lequel l'ether a une substitution en méthoxy de 22 à 33% et une substitution en hydroxypropoxy de 18 à 30%.

5. Procédé selon la revendication 3 ou 4, dans lequel la somme des substitutions en méthoxy et en hydroxypropoxy est de 42 à 58%.

6. Procédé selon la revendication 5, dans lequel l'ether a une substitution en méthoxy de 25 à 31% et une substitution en hydroxypropoxy de 18 à 27%.

7. Procédé selon l'une quelconque des revendications 3 à 6, dans lequel l'éther a une masse moléculaire moyenne en nombre de 5 000 à 40 000.

8. Procédé selon la revendication 7, dans lequel la masse moléculaire moyenne en nombre est de 10 000 à 30 000.

9. Procédé selon la revendication 8, dans lequel la masse moléculaire moyenne en nombre est de 13 000 à 26 000.

10. Procédé selon l'une quelconque des revendications 3 à 8, dans lequel la tension interfaciale d'une solution à 0,075% en poids de l'éther dans de l'eau, mesurée par rapport à du n-chlorobutane à 25°C, est inférieure à 10 mN/m.

11. Procédé selon la revendication 10, dans lequel ladite tension interfaciale est inférieure à 6 mN/m.

12. Procédé selon la revendication 1, dans lequel l'agent de mise en suspension est un éther d'hydroxypropyle et de méthyle de la cellulose tel que défini dans l'une quelconque des revendications 3 à 11.

13. Procédé selon l'une quelconque des revendications 1, 2 et 12, dans lequel on utilise en outre en tant qu'agent de mise en suspension un éther d'hydroxypropyle et de méthyle de la cellulose, soluble dans l'eau, ayant une substitution en méthoxy de 19 à 30% et une substitution en hydroxypropoxy de 4 à 12%.

14. Procédé selon la revendication 13, dans lequel ledit éther d'hydroxypropyle et de méthyle de la cellulose supplémentaire, soluble dans l'eau, a une substitution en méthoxy de 27 à 30% et une substitution en hydroxypropoxy de 4 à 7,5%.